# EUROPÄISCHE PATENTSCHRIFT

(11) **EP 4 517 126 B1**
(45) Veröffentlichungstag und Bekanntmachung des Hinweises auf die Patenterteilung: **11.11.2026**
(21) Anmeldenummer: 24188361.0
(22) Anmeldetag: 12.07.2024
(51) Int. Cl.: F16D 65/00

(54) **AUS GUSSEISEN BESTEHENDE BRÜCKE EINER SCHEIBENBREMSE**
BRIDGE MADE OF CAST IRON FOR A DISC BRAKE
PONT EN FONTE POUR FREIN À DISQUE

(30) Priorität: 31.08.2023 DE 202023104959 U
(43) Veröffentlichungstag der Anmeldung: 05.03.2025
(73) Patentinhaber: KNORR-BREMSE Systeme für Nutzfahrzeuge GmbH, 80809 München (DE)
(72) Erfinder: Heindl, Martin, 94535 Eging am See (DE)

(56) Entgegenhaltungen:
- DE-A1- 102014 106 535

## Beschreibung

Die Erfindung betrifft eine aus Gusseisen bestehende Brücke einer Scheibenbremse für ein Nutzfahrzeug nach dem Oberbegriff des Anspruchs 1.

Eine solche Brücke ist Bestandteil einer in einem Bremssattel angeordneten Zuspanneinrichtung, beispielsweise bekannt aus der DE 10 2014 106535 A1, die des Weiteren einen schwenkbaren Bremshebel aufweist. Bei einer Bremsung wird die Brücke und darin gelagerte Bremsstempel in Richtung einer Bremsscheibe verschoben, wobei die Bremsstempel gegen einen Bremsbelag gedrückt werden, der an eine fahrzeugseitige Bremsscheibe gepresst wird.

Die Fertigung der Brücke erfolgt im Gießverfahren, wozu eine geteilte Form Verwendung findet, mit jeweils einem von einer Modellhälfte geformten Bett.

Der gerade Formteilungsverlauf, der durch eine Formteilungsnaht erkennbar ist, begrenzt eine technisch notwendige Ausformschräge, die von einer Außenkante der Brücke ansteigt, jedoch zu einer deutlich dünneren Wandstärke führt. Dies ist der Bereich, der in Funktion der Brücke am höchsten belastet wird.

Eine Verdickung der Wandstärke ist allerdings bei den gegebenen, durch den Bremssattel vorgegebenen Bauraumverhältnissen nicht in dem gewünschten und für eine optimale Belastbarkeit notwendigen Maß realisierbar.

Dadurch bedingt ist zumindest die Standzeit der Brücke eingeschränkt und muss bei Bedarf, also wenn die Dauerbelastung in dem entsprechenden Bereich zu groß wird, getauscht werden.

Unabhängig davon, dass allein aufgrund der Raumverhältnisse die Wandstärke der Brücke in dem besagten Bereich nicht beliebig dick ausgeführt sein kann, würde eine solche Ausgestaltung auch eine deutliche Erhöhung des Gewichts der Brücke mit sich bringen, was der steten Forderung nach einer Gewichtsreduzierung der Scheibenbremse insgesamt entgegenstünde.

Überdies würde eine Verdickung der Wandstärke aufgrund des höheren Materialeinsatzes zu einer Verteuerung der Herstellung führen, was ebenfalls kontraproduktiv wäre.

Der Erfindung liegt die Aufgabe zugrunde, eine Brücke der gattungsgemäßen Art so weiterzuentwickeln, dass ihre Belastbarkeit mit geringem konstruktivem und fertigungstechnischem Aufwand erhöht wird.

Diese Aufgabe wird durch eine Brücke mit den Merkmalen des Anspruchs 1 gelöst.

Danach verläuft die Formteilungsnaht parallel zum Verlauf der zugeordneten Außenkante des Brückenkörpers, wobei sich diese Außenkante von einer Durchgangsöffnung zur anderen erstreckt, die parallel und abständig zueinander angeordnet sind und die der Aufnahme jeweils einer Stellspindel dienen.

Bevorzugt ist dabei die Außenkante maßgeblich, die einer Ausnehmung des Brückenkörpers für die Aufnahme einer Druckfeder aufweist, die in komplettierter Ausbildung der Scheibenbremse sich andererseits an einem Verschlussdeckel abstützt, mit dem der Aufnahmeraum des Bremssattels der Scheibenbremse verschlossen ist.

Durch die erfindungsgemäße Ausgestaltung ist die Formteilungsnaht näher an der Außenkante des Brückenkörpers als die Formteilungsnaht nach dem Stand der Technik. Daraus ergibt sich im Belastungsbereich eine deutliche Verstärkung der Wandung einerseits und eine Reduzierung der Wandung im weiteren Verlauf, bezogen auf die axiale Erstreckung der Durchgangsöffnungen.

Während dieser Bereich bislang überdimensioniert war, insbesondere da die Belastung auf der der Außenkante abgewandten Seite der Formteilungsnaht geringer ist, ist die Wandstärke in diesem Bereich nun optimiert.

Daraus ergibt sich eine Materialersparnis, die sowohl zu einer Gewichtsreduzierung der Brücke führt wie auch zu einer Reduzierung der Herstellungskosten.

Die fertigungsbedingt notwendige Formteilungsschräge, ausgehend von der Formteilungsnaht hin zur Außenkante, ist in der für die Entformung notwendigen Neigung gegeben, wobei die Länge der Formteilungsschräge im Querschnitt des Brückenkopfes gesehen kürzer ist als die nach dem Stand der Technik, jedoch, wie erwähnt, ausreichend für die Entformung nach dem Gießen.

Wie genannt, ist die Formteilungsnaht der Außenkante des Brückenkörpers zugeordnet, die die Ausnehmung für die genannte Druckfeder begrenzt. Denkbar ist aber auch, die Formteilungsnaht und damit die Formteilungsschräge auf der gegenüberliegenden Seite, also an beiden Breitseiten des Brückenkörpers vorzusehen.

Die Brücke nach der Erfindung entspricht in ihren wesentlichen Außenabmessungen einer Brücke nach dem Stand der Technik, d.h., die vorgegebenen Bauraummaße werden uneingeschränkt eingehalten. Überdies ist die neue Brücke gegenüber einer bekannten kostenneutral herstellbar und im Bedarfsfall als Austauschteil in eine vorhandene Scheibenbremse einsetzbar.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: eine Brücke nach dem Stand der Technik in einer perspektivischen Ansicht
- Figur 2: eine Brücke gemäß der Erfindung, gleichfalls perspektivisch dargestellt,
- Figur 3: einen Querschnitt durch die Brücke nach Figur 2
- Figur 4: einen vergrößerten Ausschnitt der Brücke nach Figur 3, gemäß der Ausschnittangabe A in Figur 3.

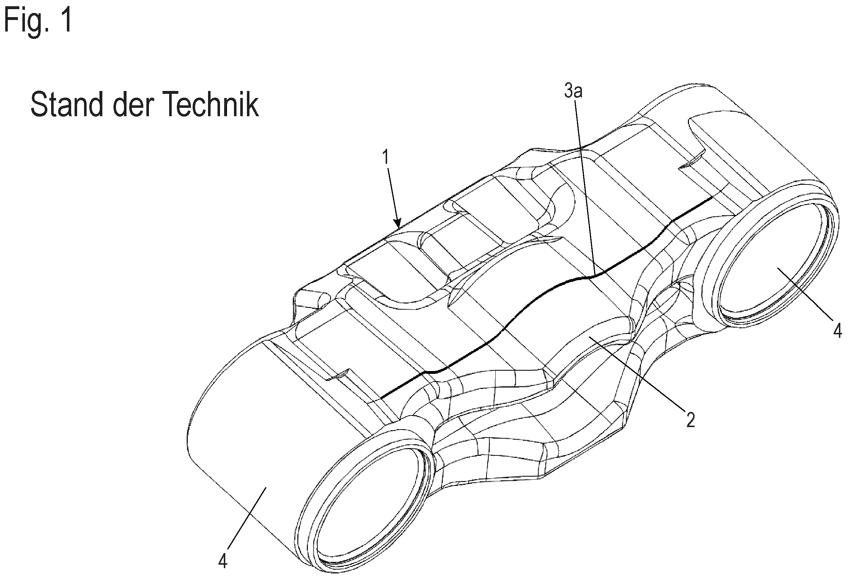

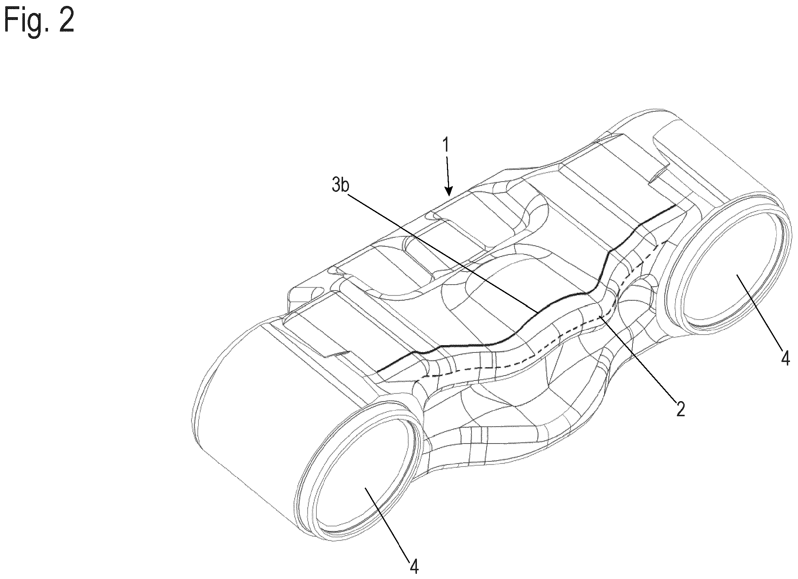

In den **Figuren 1** **und** **2** ist eine aus Gusseisen bestehende Brücke einer Scheibenbremse dargestellt, mit zwei durch einen Brückenkörper 1 miteinander verbundenen Durchgangsöffnungen 4, die parallel und abständig zueinander verlaufen und der Aufnahme jeweils einer Stellspindel dienen.

In der Figur 1 ist die Brücke nach dem Stand der Technik abgebildet, bei der fertigungsbedingt abständig zu einer Außenkante des Brückenkörpers 1 eine eine Ausformschräge begrenzende Formteilungsnaht 3a) gebildet ist, die sich linear über den Brückenkörper 1 von einer Durchgangsöffnung 4 zur anderen erstreckt.

Die Figur 2 zeigt eine Brücke nach der Erfindung, bei der die Formteilungsnaht 3b) parallel zum Verlauf der zugeordneten Außenkante 2 des Brückenkörpers 1 verläuft.

Es ist zu erkennen, dass die Außenkante 2 einen vom linearen Verlauf abweichende Kontur aufweist, ebenso wie die Formteilungsnaht 3b).

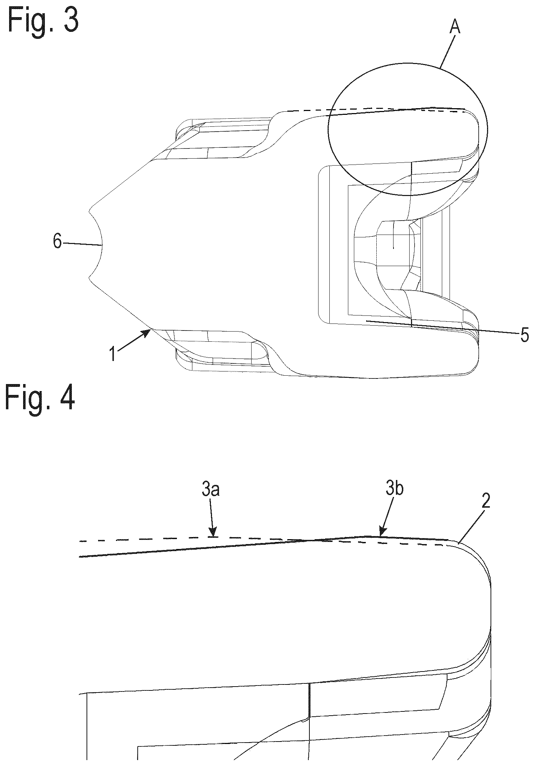

Die **Figur 3** stellt einen Querschnitt durch den Brückenkörper 1 dar, mit einer an einer Seite ausgebildeten Mulde 6 zur Anlage eines Bremshebels und einer gegenüberliegenden Ausnehmung 5 zur Aufnahme einer Druckfeder, die sich in montierter Stellung der Brücke an einem Verschlussdeckel des Bremssattels abstützt.

Die Formteilungsschräge ist in dem die Ausnehmung 5 begrenzenden, oberseitigen Wandbereich des Brückenkörpers 1 vorgesehen, wobei die Formteilungsschräge an den sich gegenüberliegenden Wandbereichen vorgesehen sein kann.

Die **Figur 4** zeigt einen vergrößerten Ausschnitt entsprechend der Kennzeichnung A in Figur 3, der einen Teil der Wandung des Brückenkörpers 1 abbildet.

Zur Verdeutlichung der Erfindung ist die Formteilungsnaht 3b) erkennbar, ebenso wie die Formteilungsnaht 3a) nach dem Stand der Technik.

So ist zu sehen, dass die Wand im Bereich der Formteilungsnaht 3b) dicker ist als die Wand nach dem Stand der Technik in diesem Bereich, wobei die Formteilungsnaht 3a) deutlich weiter entfernt von der Außenkante 2 verläuft, die die Stirnseite der Wand bildet.

### Bezugszeichenliste

- 1: Brückenkörper
- 2: Außenkante

- 3a: Formteilungsnaht
- 3b: Formteilungsnaht
- 4: Durchgangsöffnung
- 5: Ausnehmung
- 6: Mulde

## Patentansprüche

1. Aus Gusseisen bestehende Brücke einer Scheibenbremse, mit zwei durch einen Brückenkörper (1) miteinander verbundenen Durchgangsöffnungen (4) zur Aufnahme jeweils einer Stellspindel, wobei fertigungsbedingt abständig zu einer Außenkante (2) des Brückenkörpers (1) eine Ausformschräge begrenzende Formteilungsnaht (3b) gebildet ist, **dadurch gekennzeichnet, dass** die Formteilungsnaht (3b) parallel zum Verlauf der zugeordneten Außenkante (2) des Brückenkörpers (1) verläuft.

2. Brücke nach Anspruch 1,
**dadurch gekennzeichnet, dass**
eine Ausformschräge an beiden Breitseiten des Brückenkörpers (1) vorgesehen ist.

3. Brücke nach Anspruch 1 oder 2,
**dadurch gekennzeichnet, dass**
die Formteilungsnaht (3b) benachbart zu der eine Ausnehmung (5) für eine Druckfeder begrenzenden Außenkante (2) vorgesehen ist.

4. Brücke einem der vorstehenden Ansprüche,
**dadurch gekennzeichnet, dass**
der Verlauf der Außenkante (2) von einer linearen Ausrichtung abweichend verläuft.

5. Brücke nach einem der vorstehenden Ansprüche,
**dadurch gekennzeichnet, dass**
die Außenkante (2) durch die Stirnseite der die Ausnehmung (5) begrenzenden Wandung gebildet ist.

## Claims

1. Cast-iron bridge of a disc brake with two through-holes (4) connected to one another by a bridge body (1) each for receiving an actuating spindle, wherein, for manufacturing purposes, a mold parting line (3b) defining a draft angle is formed at a distance from an outer edge (2) of the bridge body (1), **characterized in that** the mold parting line (3b) runs parallel to the profile of the associated outer edge (2) of the bridge body (1).

2. Bridge according to claim 1,
**characterized in that**
a draft angle is provided on both broadsides of the bridge body (1).

3. Bridge according to claim 1 or 2,
**characterized in that**
the mold parting line (3b) is provided adjacent to the outer edge (2) which defines a recess (5) for a compression spring.

4. Bridge according to any one of the preceding claims,
**characterized in that**
the profile of the outer edge (2) deviates from a linear alignment.

5. Bridge according to any one of the preceding claims,
**characterized in that**
the outer edge (2) is formed by the end face of the wall defining the recess (5).

## Revendications

1. Pont d'un frein à disque constitué de fonte, avec deux ouvertures traversantes (4) connectées entre elles par l'intermédiaire d'un corps de pont (1) pour recevoir respectivement une broche de réglage, dans lequel une ligne de joint de moulage (3b) délimitant un chanfrein de démoulage est formée pour la fabrication à distance d'un bord extérieur (2) du corps de pont (1), **caractérisé en ce que** la ligne de joint de moulage (3b) s'étend parallèlement au tracé du bord extérieur (2) associé du corps de pont (1).

2. Pont selon la revendication 1,
**caractérisé en ce que**
un chanfrein de démoulage est prévu des deux côtés larges du corps de pont (1).

3. Pont selon la revendication 1 ou 2,
**caractérisé en ce que**
la ligne de joint de moulage (3b) est prévue à proximité du bord extérieur (2) délimitant un évidement (5) pour un ressort de pression.

4. Pont selon l'une des revendications précédentes,
**caractérisé en ce que**
le tracé du bord extérieur (2) s'étend à l'écart d'une orientation linéaire.

5. Pont selon l'une quelconque des revendications précédentes,
**caractérisé en ce que**
le bord extérieur (2) est formé par le côté frontal de la paroi délimitant l'évidement (5).
